# EUROPEAN PATENT APPLICATION

(11) **EP 0 891 102 A2**
(43) Date of publication of application: **13.01.1999**
(21) Application number: 98305377.8
(22) Date of filing: 07.07.1998
(51) Int. Cl.: H04N 9/11, H04N 9/31

(54) **Optical controllers**

(30) Priority: 09.07.1997 JP 184214/97
(71) Applicant: SONY CORPORATION, Tokyo 141 (JP)
(72) Inventor: Hashimoto, Kunika, Shinagawa-ku, Tokyo 141 (JP); Kiriyama, Hiroshi, Shinagawa-ku, Tokyo 141 (JP)
(74) Representative: Cotter, Ivan John

(57) **Abstract**

An optical controller (24) divides a predetermined source light from a light source (72) into a plurality of optical paths, projects the light of the respective optical paths onto corresponding optical shutters (77B, 77G, 77R), and opens and shuts the respective optical shutters (77B, 77G, 77R) to shut off, transmit or adjust the quantity of light for the respective optical paths whereby the source light can be used efficiently. The respective optical shutters (77B, 77G, 77R) are placed at an equal distance from the light source (72), so that the dimensions of the areas of light projected onto the optical shutters (77B, 77G, 77R) can be substantially matched with one another, so that the source light can be further efficiently projected onto the respective optical shutters.

## Description

This invention relates to optical controllers. The invention may, for example be embodied as a light quantity controller of a telecine apparatus for controlling the quantity of light of source light for each primary color.

According to a prior proposal, a telecine apparatus shoots a cinema film with a charge coupled device (CCD) camera to convert the images of the cinema film, which are sequentially formed in each frame, into video signals for television.

The telecine apparatus separates the source light emitted from a predetermined light source into three primary color component lights (red color component light, green color component light, and blue color component light), each of which is individually adjusted for its quantity of light via the corresponding liquid crystal shutter so that the three primary color component lights are balanced before being projected onto the film surface.

In such a telecine apparatus, however, the three primary color component lights obtained from source light are projected onto separately provided liquid crystal shutters. In this case, the respective liquid crystal shutters are placed at different distances from the light source, and the source light (each primary color component light), which is not completely collimated light, would be projected onto each of the liquid crystal shutters with areas of different dimensions corresponding to the different distances.

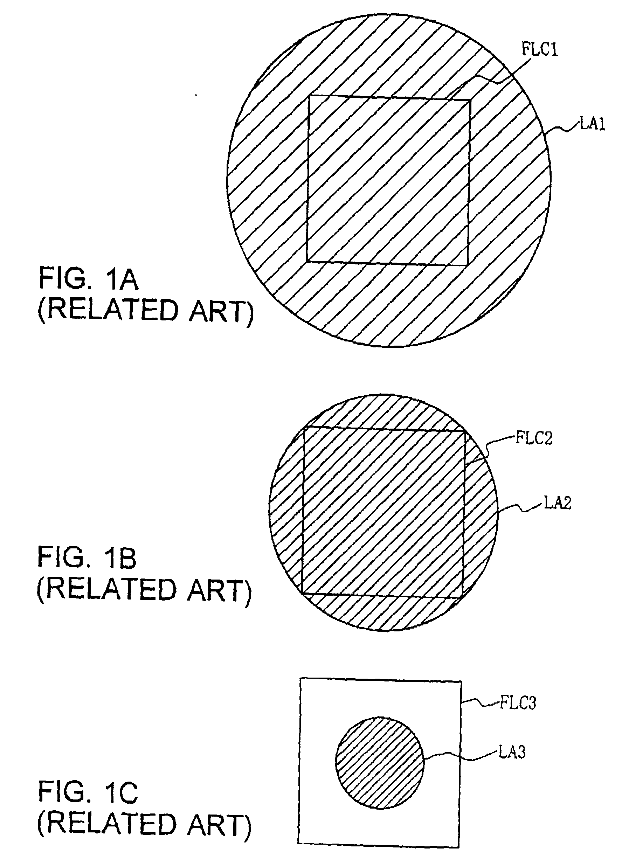

For example, as shown in Fig. 1, the blue primary color component light LA1 is projected onto a liquid crystal shutter FLC1 for blue color (Fig. 1A) placed at the closest distance from the light source with the largest projecting area, the green primary color component light LA2 is projected onto a liquid crystal shutter FLC2 for green color (Fig. 1B) placed at the subsequent distance with almost the same dimension as its liquid crystal surface, and the red primary color component light LA3 is projected onto a liquid crystal shutter FLC3 for red color (Fig. 1C) placed at the farthest distance with the substantial center of the liquid crystal surface of a projecting area smaller than the dimension of the liquid crystal surface.

As described above, since the light is projected onto the liquid crystal shutters FLC1, FLC2 and FLC3 with areas of different dimensions, when the location of the light source and/or the light source lens system is adjusted for matching the projecting area of the source light (primary color component light) on the second liquid crystal shutter FLC2 at the middle distance with its entire liquid crystal surface, the projecting areas of the projected source light (respective primary color component lights) on the other two liquid crystal shutters FLC1 and FLC3 differ from their liquid crystal surfaces (Figs. 1A and 1C) in dimension.

Here, in the first liquid crystal shutter FLC1 (Fig. 1A), since the source light (primary color component light) is projected onto a projecting area larger than its liquid crystal surface, only a part of the primary color component light is transmitted through the liquid crystal shutter FLC1 and projected onto the surface of the cinema film, so that it becomes difficult to efficiently utilize the source light.

Besides, in the third liquid crystal shutter FLC3 (Fig. 1C), since the source light (primary color component light) is projected onto a part of the liquid crystal surface, heat of the source light is concentrated on the small part of the liquid crystal surface, so that the damage to the liquid crystal surface is unavoidable.

As described above,in a previously proposed telecine apparatus, since the projecting areas of the projected source light (each primary color component light) on the respective liquid crystal shutters FLC1-FLC3 differ in dimensions, there are problems that the source light cannot be efficiently used and the liquid crystal shutters cannot be prevented from heat damage.

First and second aspects of the invention are set forth in claims 1 and 4, respectively, hereof.

According to a third aspect of the invention there is provided an optical controller for dividing predetermined source light into a plurality of optical paths, projecting the lights in the respective divided optical paths onto corresponding optical shutters, and shutting off, transmitting, or adjusting for quantity of light the lights in the respective optical path by opening and closing the optical shutters, wherein the respective optical shutters are placed at an equal distance from the light source so that the dimensions of the projecting areas of the respective lights projected onto the respective optical shutters substantially agree with one another, whereby the source light can be projected onto each optical shutter further efficiently.

According to a fourth aspect of the invention, among a plurality of optical shutters provided on the same optical path, a second optical shutter is provided with second polarization means which, for transmission light transmitted through first polarization means provided on a first optical shutter, projects only transmission light with a plane of polarization in the same predetermined direction as that of the former transmission light, and the first polarization means of the first optical shutter and the second polarization means of the second optical shutter are relatively rotated about the optical axis of the transmission light, so that the transmitted light can be further efficiently transmitted between the first optical shutter and the second optical shutter.

A preferred form of implementation of the invention described hereinbelow seeks to provide an optical controller which allows the source light to be utilized more efficiently.

The invention will now be further described, by way of illustrative and nonlimiting example, with reference to the accompanying drawings, in which:
Figs. 1A, 1B and 1C are schematic diagrams showing a mismatching state of projecting areas of source light on respective liquid crystal shutters according to a prior proposal;
Fig. 2 is a schematic diagrammatic side view showing the general configuration of a telecine apparatus using an optical controller embodying this invention;
Fig. 3 is a plan view showing the configuration of a cinema film;
Fig. 4 is a block diagram showing the configuration of a lamp house section using the optical controller embodying this invention;
Fig. 5 is a plan view showing the configuration of the lamp house section;
Figs. 6A, 6B and 6C are perspective views used for describing the configuration and operation of a liquid crystal shutter;
Fig. 7 is a perspective view showing the rotating section of the liquid crystal shutter;
Fig. 8 is a side view showing the rotating section of the liquid crystal shutter;
Fig. 9 is a flowchart showing a light controller setting procedure for the lamp house section;
Fig. 10 is a flowchart showing a rotation process procedure for a liquid crystal shutter for blue color color;
Fig. 11 is a flowchart showing a rotation process procedure for a liquid crystal shutter for green color;
Fig. 12 is a flowchart showing a rotation process procedure for a liquid crystal shutter for red color;
Fig. 13 is a flowchart showing a rotation process procedure for a liquid crystal shutter in the subsequent stage;
Fig. 14 is a schematic perspective view showing a matching state of a polarization plane through rotation and adjustment; and
Figs. 15A, 15B and 15C are schematic diagrams showing a matching state of the projecting areas of source light on the respective liquid crystal shutters.

Preferred embodiments of this invention will be described with reference to the accompanying drawings:

### (1) General Configuration of Telecine Apparatus

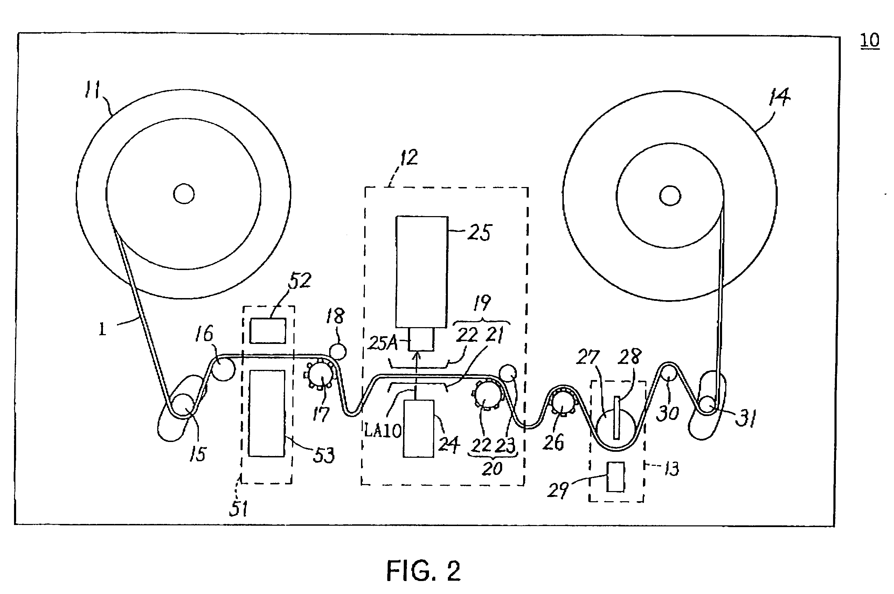

In Fig. 2, a telecine apparatus 10 is designed to take up a developed cinema film 1 supplied from a supply reel 11 around a take-up reel 14 through a digital audio reproduction section 51, an image shooting section 12, and an analog voice reproduction section 13.

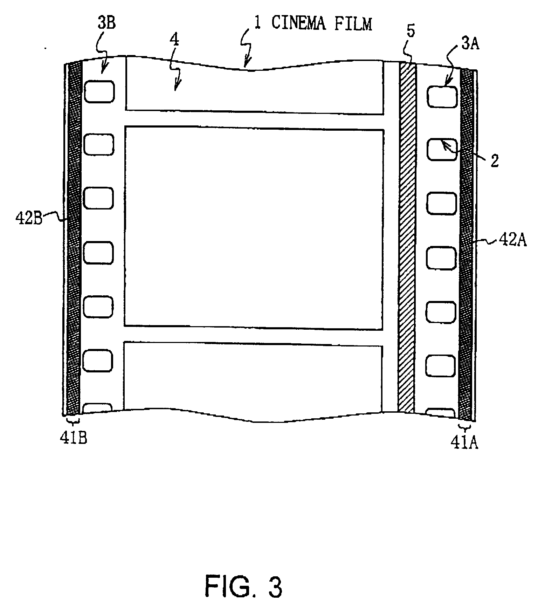

As shown in Fig. 3, the cinema film 1 is formed with digital sound tracks 42A, 42B on the areas 41A, 41B outside perforations 3A, 3B respectively. On the digital sound tracks 42A and 42B, digital audio information and tracking information are respectively recorded in a binary pattern of black (exposed film portion) and transparent (non-exposed film portion).

Therefore, in the digital audio reproduction section 51 (Fig. 2), data detecting light from a halogen lamp mounted on a light source 52 is irradiated onto the digital sound tracks 42A and 42B on the cinema I which is taken out from the supply reel 11 through rollers 15 and 16, and the transmission light having digital patterns corresponding to the information recorded on each of the digital sound track 42A and 42B is received via a line scanning CCD (not shown) in a light receiving section 53. This detects the digital pattern images received via the line scanning CCD, so that the information recorded on the digital sound tracks 42A and 42B is reproduced.

The cinema film I transmitted through the digital audio reproduction section 51 is supplied to the image shooting section 12 through a sprocket 17 and a sprocket shoe 18. The image shooting section 12 is designed to supply the cinema film 1 to the take-up reel 14 via a gate section 19 and an intermittent feeding section 20 by using a sequential frame-feeding method.

That is, the gate section 19 has an configuration for holding the film I between a picture gate 21 and a pressure plate 22, and the intermittent feeding section 20 has an configuration for holding the cinema film 1 between a sprocket for intermittent feeding (hereinafter, referred to as an intermittent feeding sprocket) 22 and a sprocket shoe for intermittent feeding (hereinafter, referred to as an intermittent feeding shoe) 23.

In a reproduction mode, the intermittent feeding sprocket 22 in the intermittent feeding section 20 is sequentially rotated by a predetermined angle, whereby the cinema film 1 is intermittently fed in such a manner that each image-recorded area of the cinema film 1 (hereinafter, referred to as a frame) stops sequentially and instantly at the gate section 19 at a rate of, for example, 24 times/second.

Here, in the gate section 19, only in the duration where the film 1 held at the gate section 19 is in the stopped states, irradiation light LA10 is projected onto the cinema film 1 from a lamp house section 24, and the image which is recorded on the frame of the stopped cinema film is shot by a charge coupled device (CCD) camera 25.

After being shot by frames in the image shooting section 12, the film is supplied to the analog audio reproduction section 13 via a sprocket 26. Here, as shown in Fig. 3, analog audio information is optically recorded with exposure widths corresponding to the amplitudes of the information on an analog audio recording track 5 of the cinema film 1. Therefore, the analog audio reproduction section 13 (Fig. 2) projects a light beam from a light source 28 onto the analog audio recording track 5 (Fig. 3) while the cinema film 1 is slidably contacted to a drum 27, and receives the transmission light via a photoelectric converter element (not shown) in an analog audio sensor 29.

Here, the photoelectric converter element sends out a light reception signal of the signal level corresponding to the quantity of light of the received transmission light to a subsequent electric circuit (not shown), which in turn reproduces the analog audio information based on the signal level of the light reception signal.

Thus, after being reproduced its analog audio information at the analog audio reproduction section 13, the cinema film 1 is taken up around the take-up reel 14 through subsequent rollers 30 and 31.

### (2) Configuration of Lamp House Section

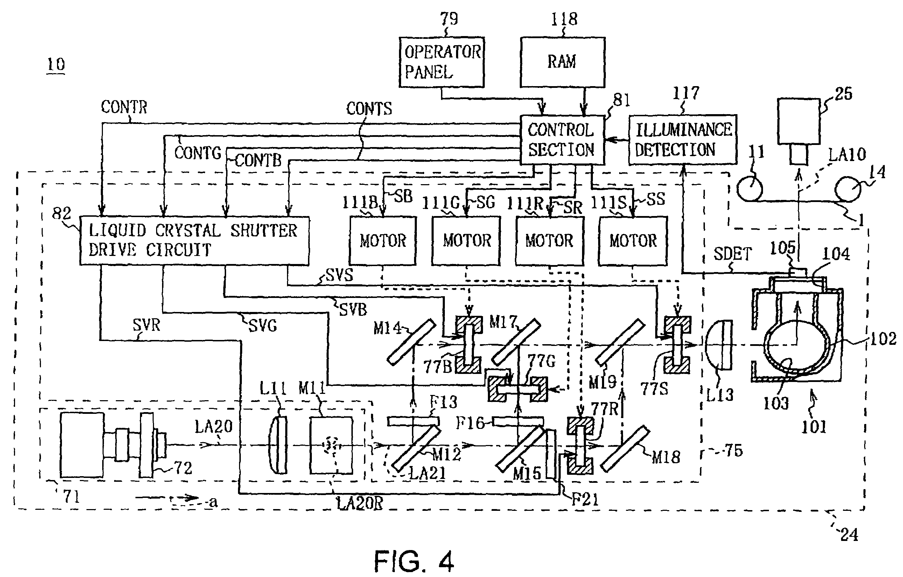

Fig. 4, in which like reference numerals are used to designate components corresponding to those in Fig. 2, shows a side view of a lamp house section 24 of the telecine apparatus 10. The lamp house section 24 projects source light LA20, which is emitted from a Xenon lamp 72 mounted on a light source section 71, onto a hot mirror M11 through an illuminating lens L11.

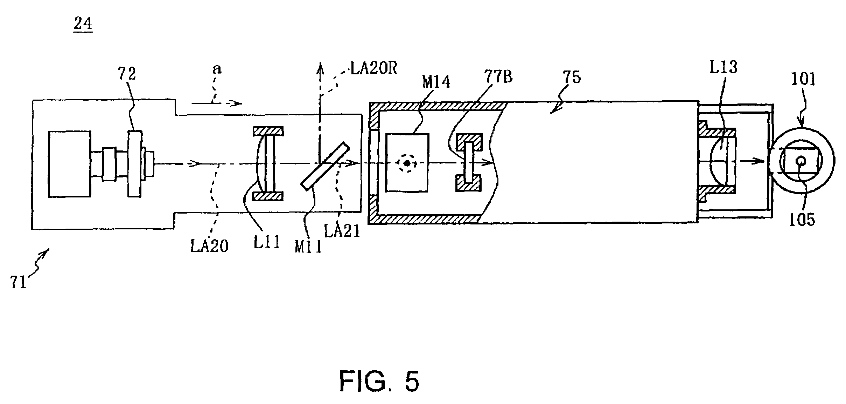

In Fig. 5 which shows a plan view of the lamp house section 24, the hot mirror M11 is arranged so that its reflecting surface is placed at an angle of 45° to the optical axis of the source light LA20. The infrared light LA20R in the source light LA20, which becomes a heat source, is reflected at an angle of about 90° on the reflecting surface of the mirror, while the visible light LA21 in the source light LA20, which is necessary as irradiation light LA10 for the cinema film 1, is transmitted through the hot mirror M11 and projected onto a dichroic mirror M12 (Fig. 4) mounted on the following light controller 75 which is provided as an optical controller.

The dichroic mirror M12 separates the visible light LA21 into a blue component and an yellow component, which is the additive complementary color component of the blue component, and supplies the blue component light to a trimming filter F13. The trimming filter F13 is a colored glass plate coated with a multilayered film, and transmits only a color component further closer to blue primary color of the blue component light separated by the dichroic mirror M12. The resulting blue primary color component light is projected onto a liquid crystal filter for blue color 77B, which is provided as an optical shutter, through a dichroic mirror M14.

In addition, the yellow component light separated by the dichroic mirror M12 is projected onto the subsequent dichroic mirror M15. The dichroic mirror M15 separates the yellow component light into a green component and a red component, and the green component light is projected onto a trimming filter F16.

The trimming filter F16 is a colored glass plate coated with a multi-layered film, and transmits only a color component further closer to blue primary color of the green component light separated by the dichroic mirror M15. The resulting green primary color component light is projected onto a liquid crystal filter for green color 77G which is provided as an optical shutter.

The trimming filter F21 is a colored glass plate coated with a multi-layered film, and allows only a color component further closer to red primary color of the red component light separated by the dichroic mirror M15. The resulting red primary color component light is projected onto a liquid crystal filter for red color 77R which is provided as an optical shutter.

Here, the respective liquid crystal filters 77B, 77G and 77R are arranged in such a manner that the optical path where the blue component light separated by the dichroic mirror M12 is projected from the dichroic mirror M12 to the liquid crystal filter for blue color 77B, the optical path where the green ccmponent light separated from the yellow component light by the dichroic mirror M12 is projected from the dichroic mirror M12 to the liquid crystal filter for green color 77G, and the optical path where the red component light separated from the yellow component light by the dichroic mirror M12 is projected from the dichroic mirror M12 to the liquid crystal filter for red color 77R are arranged at an equal distance.

Therefore, even if the source light LA20 which is projected from the Xenon lamp 72 of the light source section 71 through the illuminating lens L11 is not collimated light, the respective primary color component lights (blue primary color component light, green primary color component light and red primary color component light) based on the source light LA20 are projected onto the respective liquid crystal filters 77B, 77G and 77R, which are positioned at an equal distance from the Xenon lamp 72, with the projecting areas of the same dimension.

Here, each of the primary color component lights (blue, green and red primary color component lights) projected onto each of the liquid crystal shutters 77B, 77G and 77R as the first optical shutters is individually adjusted for quantity of light. That is, an operator separately sets each of the quantity of light for blue color, green color and red color via an operator panel 79 so that a control section 81 feeds a blue color control signal CONTB, a green color control signal CONTG and a red color control signal CONTR indicating the set values of quantity of light to a liquid crystal shutter driver circuit 82.

The liquid crystal driver circuit 82 generates square drive voltage signals SVB, SVG and SVR whose cycles vary in accordance with the respective control signals (CONTB, CONTG and CONTR), and supplies the voltage signals to the corresponding liquid crystal shutters 77B, 77G and 77R.

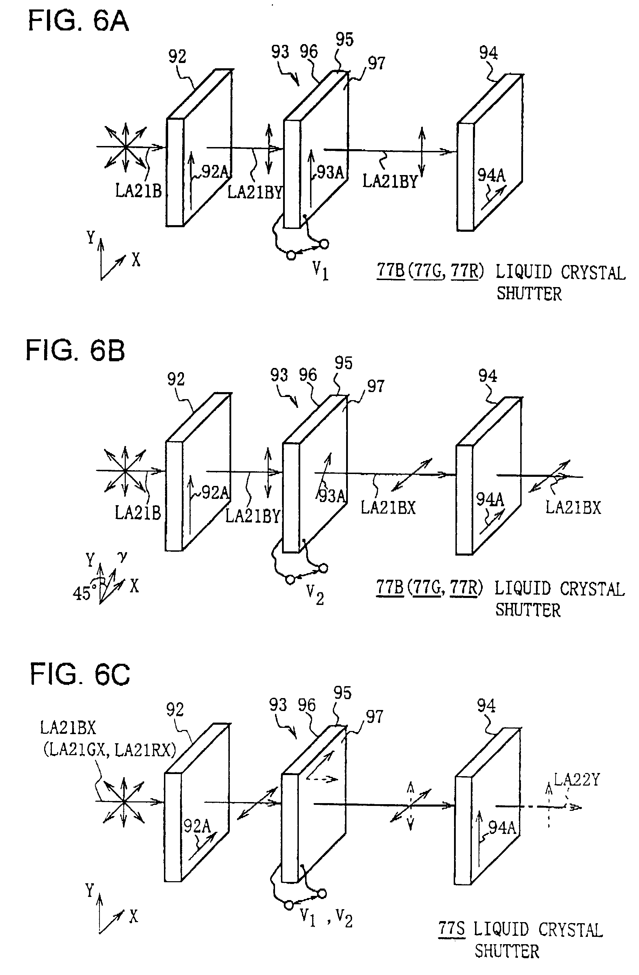

The liquid crystal shutters 77B, 77G and 77R have the same configurations, and the liquid crystal shutter for blue color 77B, for example, comprises a liquid crystal plate 93 as well as a polarization plate 92 and a light detection plate 94 as polarization means for holding the liquid crystal plate therebetween, as shown in Figs. 6A and 6B. The liquid crystal plate 93 is, for example, a ferroelectric liquid crystal (FLC) comprising a liquid crystal 95, which consists of particular liquid crystal molecules, and transparent electrodes 96 and 97 for holding the crystal 95 therebetween.

The liquid crystal plate 93 can rotate the polarization plane of incident light by changing the direction of the optical axis 93A based on the voltage value of an applied drive voltage signal SVB (Fig. 4). For example, when a square drive voltage signal SVB exhibiting the voltage values V1 and V2 alternately is applied across the transparent electrodes 96 and 97, if the drive voltage signal SVB takes the voltage value V1, the liquid crystal plate 93 sets the direction of the optical axis 93A to Y-direction as shown in Fig. 6A.

In this case, the incident light projected through the polarization plate 92 causes only the light LA21BY having a polarization plane in Y-direction to pass through the liquid crystal plate 93 based on the polarization direction 92A set in Y-direction on the polarization plate 92. Therefore, the transmission light LA21BY is transmitted to a light detection plate 94 (first polarization means) through the liquid crystal plate 93 with an optical axis 93A in the same direction (Y-direction). Here, the light detection plate 94 has its light detection direction 94A set in X-axis direction, and transmits only the light with a polarization plane in X-direction. Therefore, the light LA21BY having the polarization plane in Y-axis-direction cannot be transmitted through the light detection plate 94, and is shut off by the light detection plate 94.

On the other hand, as shown in Fig. 6B, when the drive voltage signal SVB applied across the transparent electrodes 96 and 97 takes the voltage value V2, the liquid crystal plate 93 changes the direction of the optical axis 93A to Y-direction. Consequently, the transmission light LA21BY transmitted through the polarization plate 92 has its polarization plane rotated by 90° via the liquid crystal plate 93, turning into a transmission light LA21BX with a polarization plane in X-direction and reaching to the light detection plate 94. As a result, the transmission light LA21BX is transmitted through the light detection plate 94 having the light detection direction 94A of X-axis direction.

Thus, the liquid crystal shutter 77B can control the shut-off or the transmittance of the incident light LA21B based on the voltage values V1 and V2 of the drive voltage signal SVB applied to the liquid crystal plate 93, resulting in that the cycle of the shut-off and the transmittance of the incident light LA21B varies in accordance with the change of the cycle of the drive voltage signal SVB. Consequently, the total quantity of light of the transmission light in a predetermined duration is controlled by the cycle of the drive voltage signal SVB, so that the quantity of light of the transmitted light through the liquid crystal shutter 77B is adjusted.

Among the primary color component lights (the blue, green and red primary color component lights) adjusted separately for quantity of light by being transmitted through the respective liquid crystal shutters 77B, 77G and 77R (Fig. 4), the blue primary color component light and the green primary color component light are concentrated to the same optical path on the dichroic mirror M17, and are projected onto the subsequent dichroic mirror M19.

Meanwhile, the red primary color component light transmitted through the red liquid crystal shutter 77R is projected through the dichroic mirror M18 onto the dichroic mirror M19, where it is concentrated to the same optical path as that of the blue primary color component light and the green primary color component light, and projected onto the subsequent liquid crystal shutter 77S.

The liquid crystal shutter 77S is the second optical shutter on the same optical path with reference to the liquid crystal shutters 77B, 77G and 77R as the first optical shutters, and has a similar configuration holding the liquid crystal plate 93 held between the polarization plate 92 (second polarization means) and the light detection plate 94 as shown in Fig. 6C as described above for the liquid crystal shutter 77B (77G, 77R) in Figs, 6A and 6B. This liquid crystal shutter 77S differs from the other liquid crystal shutters 77B, 77G and 77R in the polarization direction 92A of the polarization plate 92 and the light detection direction 94A of the light detection plate 94.

That is, in the polarization plate 92 of the liquid crystal shutter 77S, its polarization direction 92A is in the same X-axis direction as the light detection direction 94A of the light detection plates 94 of the other liquid crystal shutters 77B, 77G and 77R, and the light detection direction of the light detection plate 94 is in Y-axis direction accordingly. Thus, the transmission lights LA21BX, LA21GX and LA21RX (Fig. 6C), which are transmitted through the liquid crystal shutters 77B, 77G and 77R respectively and have the light detection planes in X-axis direction, can be transmitted through the polarization plate 92 of the liquid crystal shutter 77S, which has the polarization direction 92A in the same X-axis direction.

The liquid crystal shutter 77S of the above configuration operates as the drive voltage signal SVS is input from the liquid crystal shutter drive circuit 82 correspondingly to the control signal CONTS from the control section 81. In this case, the liquid crystal shutter 77S is controlled to transmit the incident light for the predetermined duration while each frame of the cinema film 1 stops at the gate section 19 (Fig. 2), and to shut off the incident light completely while the cinema film 1 moves in the gate section 19, in cooperation with the aforesaid liquid crystal shutters 77B, 77G and 77R provided for the respective primary color component lights.

Thus, in addition to the liquid crystal shutters 77B, 77G and 77R provided for the respective primary color component lights, the liquid crystal shutter 77S is provided in the subsequent stage of them and shuts off the incident light together with the liquid crystal shutters 77B, 77G and 77R in accordance with the movement of the cinema film 1, whereby, if a given dynamic range of each of the liquid crystal shutters (77B, 77G and 77R) indicating the ratio of complete transmittance to shut-off is 1000:1, a dynamic range of 1000×1000:1 can be obtained by the additional shut-off by the liquid crystal shutter 77S in the subsequent stage. Thus, the light from the light source (Xenon lamp 72) would be shut off substantially completely while the cinema film 1 moves in the gate section 19 (Fig. 2).

Each primary color component light transmitted through the liquid crystal shutter 77S is projected into an integrating sphere 102 provided in an optical integrator 101. The inner surface 103 of the integrating sphere 102 diffuses and reflects each primary color component light with a reflectance of 99%, thereby causing each primary color component light which is originally the brightest around the optical axis to have uniform brightness, so that the illuminating light LA10 is obtained.

Thus, the illuminating light LA10 obtained via the optical integrator 101 is projected onto the cinema film 1 through an opening 104.

### (3) Adjustment of Rotation of Liquid Crystal Shutter

As described above with reference to Fig. 4, the lamp house section 24 of the telecine apparatus 10 has the second optical shutter (the liquid crystal shutter 77S) in the subsequent stage of the first optical shutters (the liquid crystal shutters 77B, 77G and 77R) which are separately provided for the respective primary color component lights (the blue primary color component light, the green primary color component light and the red primary color component light).

Here, an shown in Fig. 5, if the light detection directions 94A of the light detection plates 94 (first polarization means) in the respective liquid crystal shutters 77B, 77G and 77R provided for the respective primary color component lights perfectly agree with the polarization direction 92A of the polarization plate 92 (second polarization means) of the liquid crystal shutter 77S, it is possible to prevent losses in quantity of light between the respective liquid crystal shutters 77B, 77G, 77R and the liquid crystal shutter 77S in the subsequent stage.

Therefore, in this embodiment, each of the liquid crystal shutters 77B, 77G, 77R and 77S is arranged to be rotated and controlled about its optical axis, and each of the liquid crystal shutters 77B, 77G, 77R and 77S has rotating means of the same configuration.

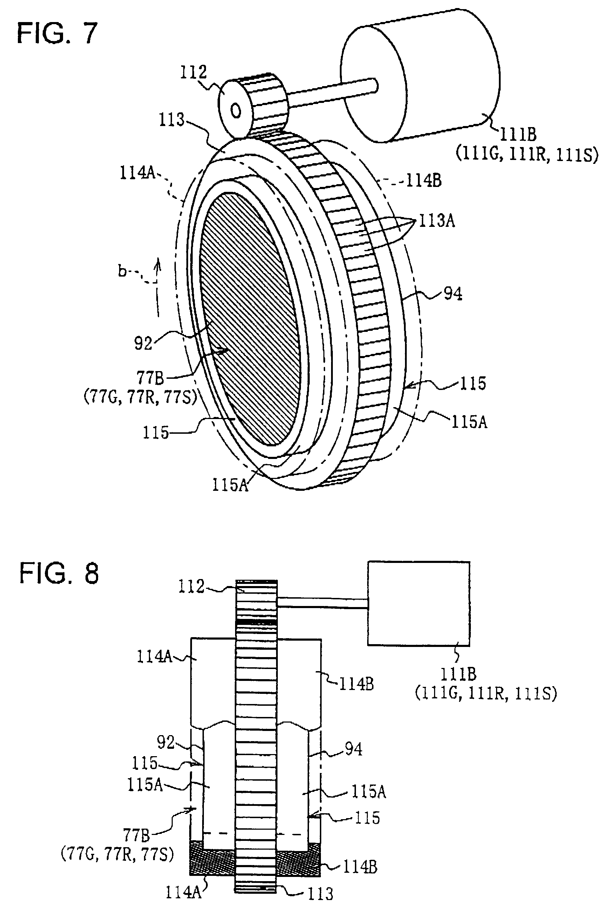

As shown in Fig. 7, for example, the liquid crystal shutter 77B comprises an annular housing 115 for holding the polarization plate 92, the liquid crystal plate 93 and the light detection plate 94 as above described for Fig. 6, along an outer periphery 115A of which an annular gear member 113 is fitted and secured. Teeth 113A are formed on the outer periphery of the gear member 113, and meshes with a gear 112 mounted on the rotation output shaft of a stepping motor 111B.

In addition, as shown in Fig. 8, an edge of the outer periphery 115A of the housing 115 is slidably held by guide members 114A and 114B, which are secured on a chassis of the lamp house section 24 (Fig. 4). Therefore, by rotatably driving the stepping motor 111B (Fig. 7), the liquid crystal shutter 77B can be accordingly rotated about the optical axis of the incident light (in the direction indicated by the arrow b, or in the opposite direction).

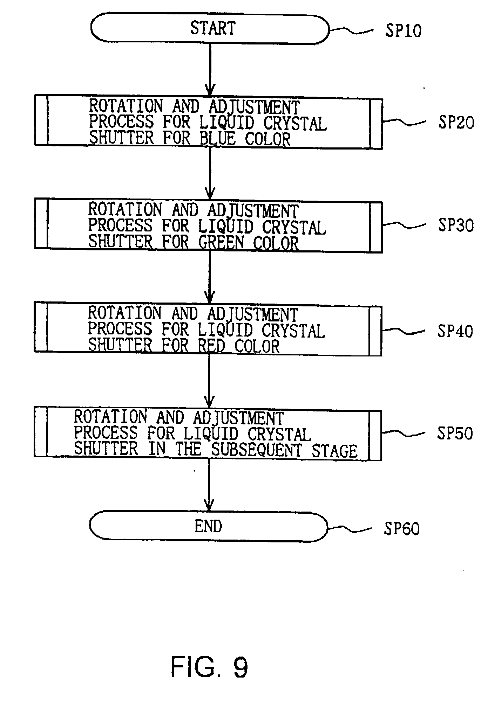

The liquid crystal shutters 77B, 77G, 77R and 77S having such rotation means can be rotatably controlled by rotation control signals SB, SG, SR and SS fed from the control section 81, respectively. That is, in setting each section before starting the use of the telecine apparatus 10, a user operates the operator panel 79 (Fig. 4) of the telecine apparatus 10 to specifies the setting mode of the light controller 75, so that the control section 81 (Fig. 4) reads the program stored in a random access memory (RAM) and starts a light controller setting procedure as shown in Fig. 9.

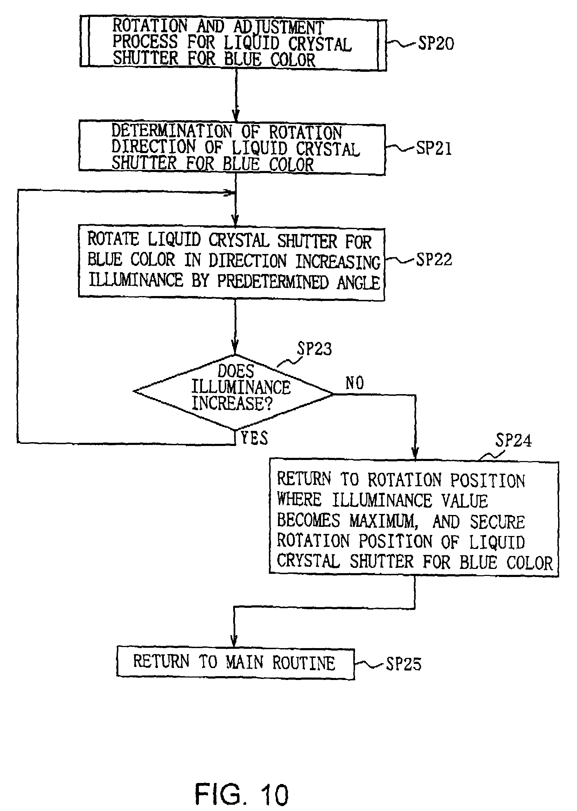

The control section 81 starts the light controller setting procedure at step SPlO in Fig. 9, and executes a rotation and control process for the liquid crystal shutter for blue color 77B in step SP20. When the control section 81 enters in the rotation and control process for the liquid crystal shutter for blue color 77B, it proceeds to step SF21 shown in Fig. 10, and slightly rotates the liquid crystal shutter for blue color 77B in a predetermined direction (for example, in the direction of the arrow b in Fig. 7).

Here, an illuminance sensor 105 mounted on an emitting side of the optical integrator 101 as shown in Fig. 4 is designed to feed a detection signal SDET of the signal level corresponding to the illuminance of the illuminating light LA10 to an illuminance detection section 117 constantly. The illuminance detection section 117 detects the illuminance value of the illuminating light LA10 based on the detection signal SDET.

Therefore, in step SP21, the control section 81 detects a change in illuminance caused by rotating the liquid crystal shutter for blue color 77B, so that it detects the direction of rotation of the liquid crystal shutter 77B in which the illuminance value increases, and determines such direction of rotation as the direction to rotate in this case.

After the direction of rotation is determined in step SP21, the control section 81 proceeds to the subsequent step SP22 where the liquid crystal shutter for blue color 77B is rotated by a predetermined angle in the above direction of rotation (that is, the direction for increasing the illuminance value), and then proceeds to step SP23 where it is determined whether or not the illuminance value of the illuminating light LA10 increases after the rotation by the predetermined angle. If a positive result is obtained here, it indicates that the light detection direction 94A of the light detection plate 94 of the rotated liquid crystal shutter for blue color 77B (Figs. 6A and 6B) has not yet agree with the polarization direction 92A of the polarization plate 92 (Fig. 6C) of the liquid crystal shutter 77S in the subsequent stage. In this case, the control section 81 proceeds to step SP22 described above so as to rotate the liquid crystal shutter for blue color 77B further by the predetermine angle.

On the other hand, if a negative result is obtained in step SP23, it indicates that the liquid crystal shutter for blue color 77B has already rotated beyond the rotation position where the illuminating light LA10 exhibits its maximum illuminance value, so that the control section 81 proceeds to step SP24 where the liquid crystal shutter for blue color 77B is returned to the rotation position where the illuminance value becomes the maximum, and returns to the main routine of Fig. 9 via the following step SP25. In this connection, the illuminance values of the illuminating light LA10 at the respective rotation positions of the liquid crystal shutter for blue color 77B are stored in a RAM 118 (Fig. 4), and referred when required.

Since the adjustment of rotation of the liquid crystal shutter for blue color 77B is executed as the first adjustment processing in the above manner, a change in illuminance of the illuminating light LA10 caused by the rotation of the liquid crystal shutter for blue color 77B can be more accurately detected as quantity of light of the lights transmitted through the other liquid crystal shutters 77G, 77R, and the liquid crystal shutter 77S in the subsequent stage is smaller than a case where the liquid crystal shutter for blue color 77B is rotated and adjusted after the other liquid crystal shutters 77G and 77R corresponding to the other primary color components (green and red) are rotated and adjusted. Therefore, in the use of a cinema film 1 which does not transmit blue primary color component light so easily, it is possible to accurately reproduce color of images to be shot by the CCD camera 25 by exactly increasing the transmittance particularly for the blue primary color component light.

After the rotation adjustment for the liquid crystal shutter for blue color 77B is completed thus, the control section 81 proceeds to step SP30 in the main routine of Fig. 9, where the rotation and control process for the liquid crystal shutter for green color 77G is executed.

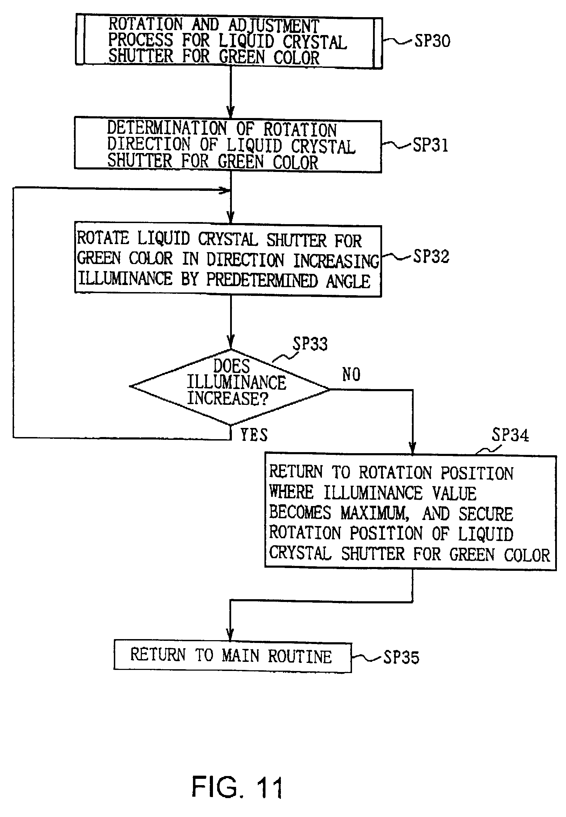

When the control section 81 starts the rotation and control process SP30 for the liquid crystal shutter for green color 77G, it proceeds to step SP31 shown in Fig. 11, and slightly rotates the liquid crystal shutter for green color 77G in a predetermined direction (for example, in the direction of the arrow b in Fig. 7) to detect a change in illuminance of the illuminating light LA10 caused by the rotation of the liquid crystal shutter for green color 77G. Here, the control section 81 detects the direction of rotation of the liquid crystal shutter for green color 77G in which the illuminance value increases, and determines such direction of rotation as the direction to rotate in this case.

After the direction of rotation is determined in step SP31, the control section 81 proceeds to the subsequent step SP32 where the liquid crystal shutter for green color 77G is rotated by a predetermined angle in the above direction of rotation (that is, the direction for increasing the illuminance value), and then proceeds to step SP33 where it is determined whether or not the illuminance value of the illuminating light LA10 increases after the rotation by the predetermined angle. If a positive result is obtained here, it indicates that the light detection direction 94A of the light detection plate 94 of the rotated liquid crystal shutter for green color 77G (Figs. 6A and 6B) has not yet agree with the polarization direction 92A of the polarization plate 92 (Fig. 6C) of the liquid crystal shutter 77S in the subsequent stage. In this case, the control section 81 proceeds to step SP32 described above to rotate the liquid crystal shutter for green color 77G further by the predetermined angle.

On the other hand, if a negative result is obtained in step SP33, it indicates that the liquid crystal shutter for green color 77G has already rotated beyond the rotation position where the illuminating light LA10 exhibits its maximum illuminance value, so that the control section 81 proceeds to step SP34 where the liquid crystal shutter for green color 77G is returned to the rotation position where the illuminance value becomes the maximum, and returns to the main routine of Fig. 9 via the following step SP35. In this connection, the illuminance values of the illuminating light LA10 at the respective rotation positions of the liquid crystal shutter for green color 77G are stored in the RAM 118 (Fig. 4), and referred when required.

After the rotation adjustment for the liquid crystal shutter for green color 77G is completed thus, the control section 81 proceeds to step SP40 in the main routine of Fig. 9, where the rotation and control process for the liquid crystal shutter for red color 77R is executed.

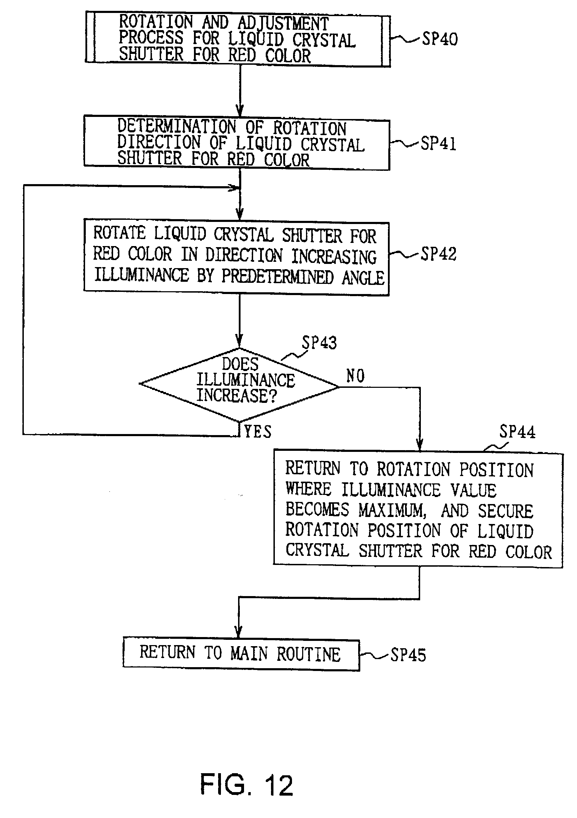

When the control section 81 starts the rotation and control process SP40 for the liquid crystal shutter for red color 77R, it proceeds to step SP41 shown in Fig. 12, and slightly rotates the liquid crystal shutter for red color 77R in a predetermined direction (for example, in the direction of the arrow b in Fig. 7) to detect a change in illuminance of the illuminating light LA10 caused by the rotation of the liquid crystal shutter for red color 77R. Here, the control section 81 detects the direction of rotation of the liquid crystal shutter for red color 77R in which the illuminance value increases, and determines such direction of rotation as the direction to rotate in this case.

After the direction of rotation is determined in step SP41, the control section 81 proceeds to the subsequent step SP42 where the liquid crystal shutter for red color 77R is rotated by a predetermined angle in the above direction of rotation (that is, the direction for increasing the illuminance value), and then proceeds to step SP43 where it is determined whether or not the illuminance value of the illuminating light LA10 increases after the rotation by the predetermined angle. If a positive result is obtained here, it indicates that the light detection direction 94A of the light detection plate 94 of the rotated liquid crystal shutter for red color 77R (Figs. 6A and 6B) has not yet agree with the polarization direction 92A of the polarization plate 92 (Fig. 6C) of the liquid crystal shutter 77S in the subsequent stage. In this case, the control section 81 proceeds to step SP42 described above to rotate the liquid crystal shutter for red color 77R further by the predetermined angle.

On the other hand, if a negative result is obtained in step SP43, it indicates that the liquid crystal shutter for red color 77R has already rotated beyond the rotation position where the illuminating light LA10 exhibits its maximum illuminance value, so that the control section 81 proceeds to step SP44 where the liquid crystal shutter for red color 77R is returned to the rotation position where the illuminance value becomes the maximum, and returns to the main routine of Fig. 9 via the following step SP45. In this connection, the illuminance values of the illuminating light LA10 at the respective rotation positions of the liquid crystal shutter for red color 77R are stored in the RAM 118 (Fig. 4), and referred when required.

After the rotation adjustment for the liquid crystal shutter for red color 77R is completed thus, the control section 81 proceeds to step SP50 in the main routine of Fig. 9 where the rotation and control process for the liquid crystal shutter 77S (Fig. 4) in the subsequent stage is executed.

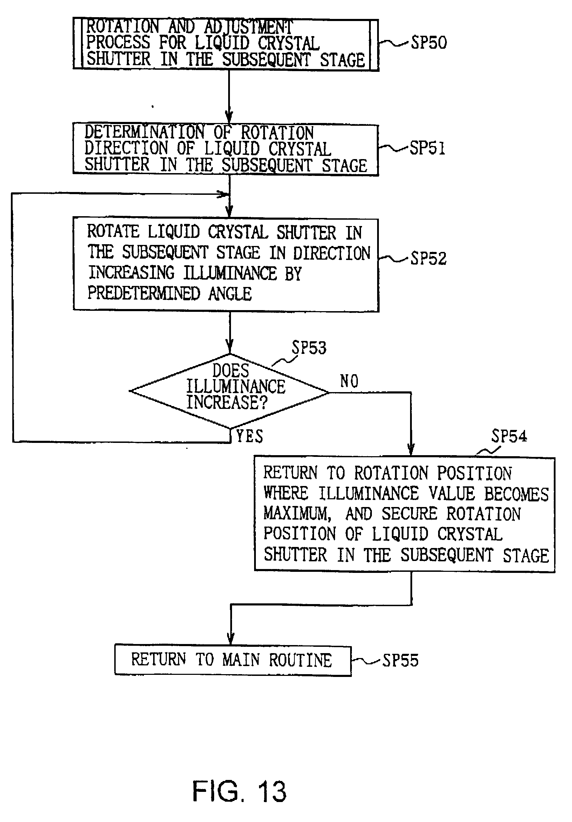

When the control section 81 starts the rotation and control process SP50 for the liquid crystal shutter 77S in the subsequent stage, it proceeds to step SP51 shown in Fig. 13, and slightly rotates the liquid crystal shutter 77S in the subsequent stage in a predetermined direction (for example, in the direction of the arrow b in Fig. 7) to detect a change in illuminance of the illuminating light LA10 caused by the rotation of the liquid crystal shutter 77S. Here, the control section 81 detects the direction of rotation of the liquid crystal shutter 77S in which the illuminance value increases, and determines such diraction of rotation as the direction to rotate in this case.

After the direction of rotation is determined in step SP51, the control section 81 proceeds to the subsequent step SP52 where the liquid crystal shutter 77S is rotated by a predetermined angle in the above direction of rotation (that is, the direction for increasing the illuminance value), and then proceeds to step SP53 where it is determined whether or not the illuminance value of the illuminating light LA10 increases after the rotation by the predetermined angle. If a positive result is obtained here, it indicates that the polarization direction 92A of the polarization plate 92 of the rotated liquid crystal shutter 77S (Fig. 6C) in the subsequent stage has not yet agree with the light detection directions 94A of the light detection plates 94 (Fig. 6A and 6B) of the other liquid crystal shutters 77B, 77G and 77R provided in the previous stage. In this case, the control section 81 proceeds to step SP52 described above to rotate the liquid crystal shutter 77S in the subsequent stage further by the predetermined angle.

On the other hand, if a negative result is obtained in step SP53, it indicates that the liquid crystal shutter 77S in the subsequent stage has already rotated beyond the rotation position where the illuminating light LA10 exhibits its maximum illuminance value, so that the control section 81 proceeds to step SP54 where the liquid crystal shutter 77S in the subsequent stage is returned to the rotation position where the illuminance value becomes the maximum, and returns to the main routine of Fig. 9 via the following step SP55. In this connection, the illuminance values of the illuminating light LA10 at the respective rotation positions of the liquid crystal shutter 77S in the subsequent stage are stored in the RAM 118 (Fig. 4), and referred when required.

Accordingly, since the fine rotation adjustment of the liquid crystal shutter 77S in the subsequent stage is executed after the rotation adjustment of each of the liquid crystal shutters 77B, 77G and 77R corresponding to the primary color component lights is completed, it is possible that the polarization direction 92A of the polarization plate 92 of the liquid crystal shutter 77S in the subsequent stage surely agrees with the light detection directions 94A of the light detection plates 94 of the respective liquid crystal shutters 77B, 77G and 77R corresponding to the primary color component light.

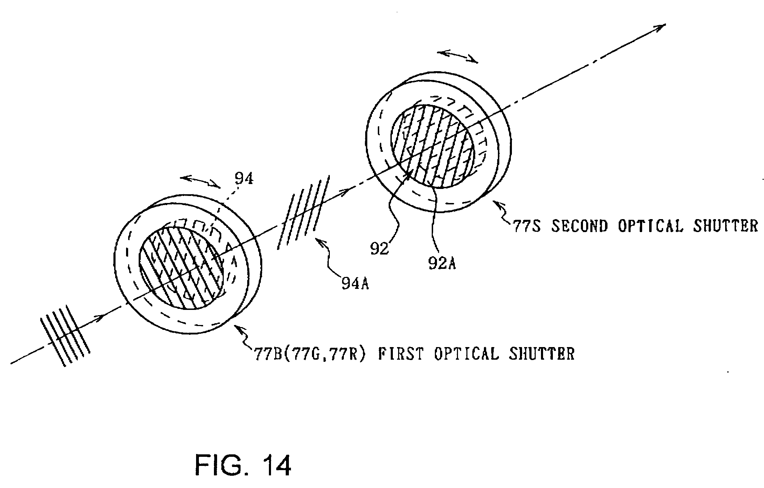

Thus, once the rotation adjustment for the liquid crystal shutter 77S in the subsequent stage is completed, the control section 81 proceeds to step SP60 in the main routine of Fig. 9, where the whole light controller setting procedure ends. When the procedure is completed, there is attained a state where the light detection direction 94A of the light detection plate 94 of each of the liquid crystal shutters 77B, 77G and 77R corresponding to the primary color component lights surely agrees with the polarization direction 92A of the polarization plate 92 of the liquid crystal shutter 77S in the subsequent stage, as shown in Fig. 14.

Consequently, losses in quantity of light of the transmission light between each of the liquid crystal shutters 77B, 77G, 77R, and the liquid crystal shutter 77S in the subsequent stage can be prevented, and the source light LA20 (Fig. 4) can be used further efficiently.

### (4) Operation and Effects of the Embodiment

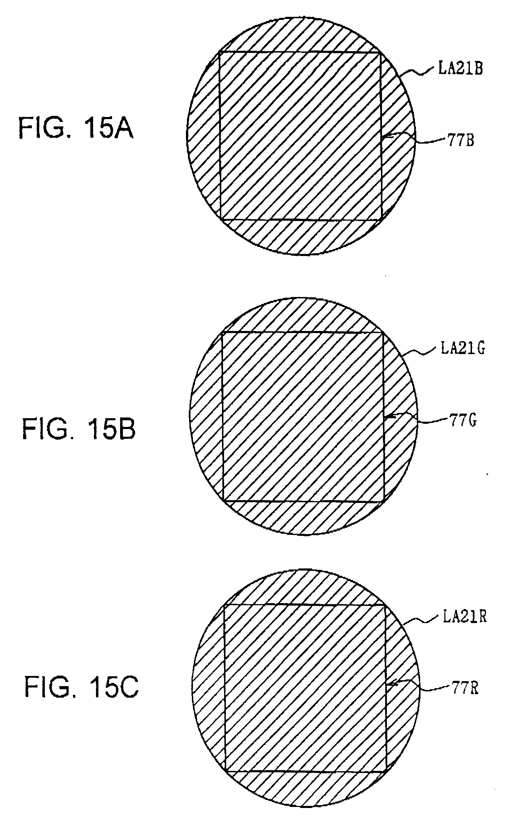

In the above configuration, when the lamp house section 24 is set before the use of the telecine apparatus 10, a user moves the light source section 71 shown in Figs. 4 and 5 along the direction indicated by the arrow a or the opposite direction so that the projecting areas of the respective primary color component lights (the blue primary color component light LA21B, the green primary color component light LA21G and the red primary color component light LA21R) projected onto the respective liquid crystal shutters 77B, 77G and 77R have almost the same dimensions as the respective liquid crystal surfaces, as shown in Fig. 15.

In this case, since the respective liquid crystal shutters 77B, 77G and 77R are placed at an equal distance from the light source (Xenon lamp 72), the adjusting of any one of the projecting areas of the primary color component lights on the liquid crystal shutters 77B, 77G and 77R can also adjust the projecting areas on the other liquid crystal shutters to desired dimensions.

Therefore, each of the primary color component lights is projected on each of the liquid crystal shutters 77B, 77G and 77R with the projecting areas of the highest efficiency.

Moreover, as described above, the liquid crystal shutters 77B, 77G, 77R and 77S are rotated and adjusted as shown in Fig. 9, so that the source light LA20 can be projected onto the cinema film I as the illuminating light LA10 without losses in quantity of light between the liquid crystal shutters 77B, 77G, 77R and the liquid crystal shutter 77S. Thus, the source light LA20 is further efficiently used.

Thus, according to the above configuration, the projecting area of the source light LA20 on all of the liquid crystal shutters 77B, 77G and 77R can be established at the highest efficiency, and losses in quantity of light between the liquid crystal shutters 77B, 77G, 77R, and the liquid crystal shutter 77S in the subsequent stage can be prevented by matching the polarization plane of the liquid crystal shutter 77S in the subsequent stage, which is provided on the same optical path with respect to the liquid crystal shutters 77B, 77G and 77R corresponding to the respective primary color component lights, with the polarization plane of the light projected onto the liquid crystal shutter 77S.

Consequently, the source light LA20 can be further efficiently used as the illuminating light LA10 for the cinema film 1.

In addition, since the respective projecting areas of the primary color component lights on the respective liquid crystal shutters 77B, 77G and 77R can be set to substantially agree with the dimensions of the liquid crystal surfaces, it is possible to avoid thermal damage of the liquid crystals caused by the smaller projecting areas of the incident light (the primary color component lights) on the liquid crystal surfaces.

### (5) Other Embodiments

Although the above embodiment has been described for a case where the light source (Xenon lamp 72) is placed at an equal distance to each of the liquid crystal shutters 77B, 77G and 77R by setting the placement of the respective liquid crystal shutters 77B, 77G and 77R as shown in Fig. 4, this invention is not limited thereto, but may be applied to various types of placement.

In addition, although the above embodiment has been described for a case where all of the liquid crystal shutters 77B, 77G, 77R and 77S are rotated and adjusted as described above for Fig. 9, this invention is not limited thereto, but may be applied to a case where only the liquid crystal shutters 77B, 77G and 77R provided for respective primary color component lights are rotated and adjusted, or a case where only the liquid crystal shutter 77S in the subsequent stage is rotated and adjusted.

Furthermore, the above embodiment has been described for a case where the liquid crystal shutters 77B, 77G and 77R provided for respective primary color component lights are rotated and adjusted in such an order of the liquid crystal shutter for blue color 77B, the liquid crystal shutter for green color 77G and the liquid crystal shutter for red color 77R. However, this invention is not limited thereto, but may employ various orders for the rotation and adjustment.

Furthermore, although the above embodiment has been described for a case where the stepping motors 111B, 111G, 111R and 111S are employed as rotation means for rotating the liquid crystal shutter 77B, 77G, 77R and 77S respectively, this invention is not limited thereto. The entire housing 115 of the liquid crystal (Fig. 7) may be integrated with an ultra sonic motor and rotated together, for example.

Furthermore, although the above embodiment has been described for a case where each of the liquid crystal shutters 77B, 77G, 77R and 77S is rotated and adjusted under control of the control section 81, this invention is not limited thereto, but may be applied to a case where an user reads obtained illuminance values via the illuminance sensor 105, and manually rotates and adjusts the respective liquid crystal shutter 77B, 77G, 77R and 77S.

Furthermore, the above embodiment has been described for a case where the liquid crystal shutters 77B, 77G, 77R and 77S, each of which completely transmits or shuts off the incident light via the liquid crystal plate 93 (Fig. 6), are employed. However, this invention is not limited thereto, but may employ, for example, a liquid crystal shutter such that its liquid crystal surface is divided into a plurality of liquid crystal plates and each of the liquid crystal plates separately transmits or shuts off the incident light so that the liquid crystal shutter as a whole adjusts for quantity of light and transmits the incident light.

Furthermore, although the above embodiment has been described for a case where quantity of light of the respective primary color component lights is adjusted by using the liquid crystal shutters 77B, 77G, 77R and 77S of FLC configuration, this invention is not limited thereto, but may employ various optical shutters such as a liquid crystal shutters of other configurations than FLC and a mechanical shutter in stead of the liquid crystal shutters of FLC configuration.

Furthermore, although the above embodiment has been described for a case where the Xenon lamp 72 is employed as the light source, this invention is not limited thereto, but may employ various other light sources such as a tungsten lamp.

Furthermore, although the above embodiment has been described for a case where this invention is applied to the lamp house section 24 of the telecine apparatus 10, this invention is not limited thereto, but, in fact, may be widely applied to an optical device for controlling quantity of light for each optical path, or an optical device having a plurality of polarization plates on the same optical path.

As described above, according to this invention, there is provided an optical controller for dividing predetermined source light into a plurality of optical paths, projecting the lights of the divided optical paths onto corresponding optical shutters, and opening and closing the optical shutters so that the lights in the respective optical paths are shut off, transmitted or adjusted for quantity of light, wherein the respective optical shutters are placed at an equal distance from the light source, so that the projecting areas of the respective lights on the respective optical shutters can be substantially matched one another, whereby the source light can be further efficiently projected onto the respective optical shutters.

In addition, among a plurality of optical shutters provided on the same optical path, a second optical shutter is provided with second polarization means which, for transmission light transmitted through first polarization means provided on a first optical shutter, projects only transmission light with a plane of polarization in the same predetermined direction as that of the former transmission light, and the first polarization means of the first optical shutter and the second polarization means of the second optical shutter are relatively rotated about the optical axis of the transmission light, so that the transmitted light can be further efficiently transmitted between the first optical shutter and the second optical shutter.

## Claims

1. An optical controller for
dividing predetermined source light into a plurality of optical paths,
projecting said divided lights in respective optical paths onto corresponding optical shutters, and
opening and closing said respective optical shutters so that said lights in respective optical paths are shut off, transmitted or adjusted for quantity of light, wherein
said respective optical shutters are provided at an equal distance from said light source.

2. The optical controller according to claim 1, wherein
said optical controller is a light source device of a telecine apparatus for re-condensing said lights transmitted through said respective shutters so as to project said recondensed lights onto a cinema film, and for shooting the transmission light transmitted through said cinema film via an image-shooting camera.

3. The optical controller according to claim 1, wherein
said respective optical shutters are liquid crystal shutters.

4. An optical controller comprising:
first light quantity adjusting means having first polarization means for transmitting light with a polarization plane in a predetermined direction;
second light quantity adjusting means having second polarization means for projecting only said transmission light with the polarization plane in said predetermined direction for said transmission light transmitted through said first optical shutter; and
rotation means for relatively rotating said first polarization means of first light quantity adjusting means and said second polarization means of second light quantity adjusting means about the optical axis of said transmission light.

5. The optical controller according to claim 4, wherein
said optical controller is a light source device of a telecine apparatus for projecting transmission light transmitted through said second optical shutter onto a cinema film and shooting the transmission light transmitted through said cinema film with an image-shooting camera.

6. The optical controller according to claim 4, wherein:
said first polarization means of first light quantity adjusting means comprises a first optical shutter for each plurality of optical paths into which predetermined source light is divided; and
said second polarization means of second light quantity adjusting means comprises a second optical shutter.

7. The optical controller according to claim 6, wherein,
in accordance with respective three primary color component lights into which predetermined source light is divided,
said first optical shutters of first polarization means are composed of an optical shutter for red color component light R, an optical shutter for green color component light G, and an optical shutter for blue color component light B.

8. The optical controller according to claim 6, wherein each of said first and second optical shutters comprises:
a polarization plate;
a light detection plate; and
a liquid crystal plate composed of a liquid crystal and transparent electrodes, being held between said polarization plate and said light detection plate.

9. The optical controller according to claim 6, comprising
shutter driving means for controlling quantity of light of transmission light transmitted through each of said first and second optical shutters, wherein
said shutter driving means controls quantity of transmission light by applying a drive voltage across said transparent electrodes of said liquid crystal plate in each of said optical shutters to transmit or shut off light with a polarization plane in a predetermined direction.

10. The optical controller according to claim 7, wherein
said first optical shutters R, G and B, and said second optical shutter are respectively held in annular housings, and
said first optical shutters R, G and B, and said second optical shutter are respectively rotated relatively about the optical axis by said rotation means.

11. , The optical controller according to claim 10, wherein
said first optical shutters R, G and B, and said second optical shutter are respectively held in annular housings, and are rotated by said rotation means in such a manner that:
firstly, said optical shutter B is rotated about the optical axis to perform the first rotation adjustment,
secondly, said optical shutter G is relatively rotated about the optical axis to perform the second rotation adjustment,
thirdly, said optical shutter R is relatively rotated about the optical axis to perform the third rotation adjustment, and
finally, said second optical shutter is relatively rotated about the optical axis to perform the fourth rotation adjustment.
